# EUROPEAN PATENT APPLICATION

(11) **EP 3 560 635 A1**
(43) Date of publication of application: **30.10.2019**
(21) Application number: 19171411.2
(22) Date of filing: 26.04.2019
(51) Int. Cl.: B22F 3/105, B33Y 10/00, B33Y 30/00, B33Y 50/02, B29C 64/153, B29C 64/227, B29C 64/232, B29C 64/236

(54) **ADDITIVE MANUFACTURING SYSTEM WITH MOVEABLE SENSORS**

(30) Priority: 26.04.2018 US 201815963124
(71) Applicant: Hamilton Sundstrand Corporation, Charlotte, NC 28217-4578 (US)
(72) Inventor: DEFORGE, Jansen, South Windsor, CT Connecticut 06074 (US); REYNOLDS, Shawn Karl, Byron, IL Illinois 61010 (US); MUGRAGE, Andy, Byron, IL Illinois 61010 (US)
(74) Representative: Dehns

(57) **Abstract**

An additive manufacturing system includes an energy gun (28) for melting at least a portion of a raw material layer and thereby forming at least in part a slice of a workpiece (38) and a sensor (206) for detecting surface and sub-surface anomalies or physical properties of the portion. The system also includes a positioning mechanism (204) that moves the sensor in at least one of a normal direction and a parallel direction relative to an upper surface of the workpiece.

## Description

### BACKGROUND

Exemplary embodiments pertain to the art of additive manufacturing system and, more particularly, to an additive manufacturing system with subsurface inspection capabilities.

Traditional additive manufacturing systems include, for example, Additive Layer Manufacturing (ALM) devices, such as Direct Metal Laser Sintering (DMLS), Selective Laser Melting (SLM), Laser Beam Melting (LBM) and Electron Beam Melting (EBM) that provide for the fabrication of complex metal, alloy, polymer, ceramic and composite structures by the freeform construction of the workpiece, layer-by-layer. The principle behind additive manufacturing processes involves the selective melting of atomized precursor powder beds by a directed energy source, producing the lithographic build-up of the workpiece. The melting of the powder occurs in a small localized region of the energy beam, producing small volumes of melting, called melt pools, followed by rapid solidification, allowing for very precise control of the solidification process in the layer-by-layer fabrication of the workpiece. An example of a particular type of system is a PBF-L (powder bed fusion - laser) additive system where the energy beam is a laser. Any of the above devices are directed by three-dimensional geometry solid models developed in Computer Aided Design (CAD) software systems.

The laser in a PBF-L system is focused by a lens, then deflected by a mirror so that the energy beam selectively impinges on a powder bed. In operation, the powder is melted at the laser focus site on the build surface or substrate. The strategy of the scanning, power of the energy beam, residence time or speed, and sequence of melting are directed by the embedded CAD system. The precursor powder is either gravitationally fed from cassettes or loaded by a piston so that it can be raked onto the build table. The excess powder is raked off and collected for re-application. Since laser is fixed, the build table can be lowered with each successive layer so that the workpiece is built upon the pre-solidified layer beneath.

Unfortunately, known additive manufacturing processes and systems may produce defects that can jam or stop a manufacturing process and/or are not easily fixed or identifiable after the additive manufacturing process is completed. There is a need in the art for improved defect detection and correction during the build process.

### BRIEF DESCRIPTION

Disclosed is an additive manufacturing system that includes an energy gun for melting at least a portion of a raw material layer and thereby forming at least in part a slice of a workpiece and a sensor for detecting surface and sub-surface anomalies or physical properties of the portion. The system further includes a positioning mechanism that moves the sensor in at least one of a normal direction and a parallel direction relative to an upper surface of the workpiece.\

In addition to one or more of the features described above, or as an alternative, in further embodiments the sensor is an x-ray sensor.

In addition to one or more of the features described above, or as an alternative, in further embodiments the sensor is an ultrasonic sensor.

In addition to one or more of the features described above, or as an alternative, in further embodiments the sensor is a thermal sensor.

In addition to one or more of the features described above, or as an alternative, in further embodiments the sensor is an eddy current sensor.

In addition to one or more of the features described above, or as an alternative, in further embodiments the sensor is one of: an electromagnetic sensor an optical sensor, a non-contact dimensional sensor, or a blue light sensor.

In addition to one or more of the features described above, or as an alternative, in further embodiments the positioning mechanism is an arm.

In addition to one or more of the features described above, or as an alternative, in further embodiments the arm moves the sensor in both a normal direction and a parallel direction relative to the upper surface of the workpiece.

In addition to one or more of the features described above, or as an alternative, in further embodiments the energy gun is a laser gun.

Also disclosed is a method of operating an additive manufacturing system. The method includes: forming at least a portion of a first slice of a workpiece; taking a first image of a first region of the first slice with a sensor; identifying an anomaly of an upper surface of the first slice through the image; and moving the sensor in a direction that is one or both of parallel and normal to an upper surface of the workpiece and taking a first image of a second region of the first slice.

In addition to one or more of the features described above, or as an alternative, in further embodiments, the method includes moving the sensor in a direction normal to an upper surface of the workpiece; and moving the sensor in a direction parallel to an upper surface of the workpiece.

In addition to one or more of the features described above, or as an alternative, in further embodiments, the sensor is one or: an ultrasonic sensor; a thermal sensor; an x-ray sensor; and an electromagnetic sensor.

In addition to one or more of the features described above, or as an alternative, in further embodiments, the method includes forming a second slice on top of the first slice; and taking a second image of the first region of the first slice with the sensor after the second slice has been formed on the first slice.

In addition to one or more of the features described above, or as an alternative, in further embodiments, the method includes determining that the anomaly no longer exists after taking the second image.

In addition to one or more of the features described above, or as an alternative, in further embodiments, the method includes taking a second image of the first region with a different sensor after the first image of the region is taken.

### BRIEF DESCRIPTION OF THE DRAWINGS

The following descriptions should not be considered limiting in any way. With reference to the accompanying drawings, like elements are numbered alike:
FIG. 1 is an example of a prior art additive manufacturing system;
FIG. 2 is an example of an additive manufacturing system according to one embodiment; and
FIG. 3 is an example of an art additive manufacturing system according to another embodiment.

### DETAILED DESCRIPTION

A detailed description of one or more embodiments of the disclosed apparatus and method are presented herein by way of exemplification and not limitation with reference to the Figures.

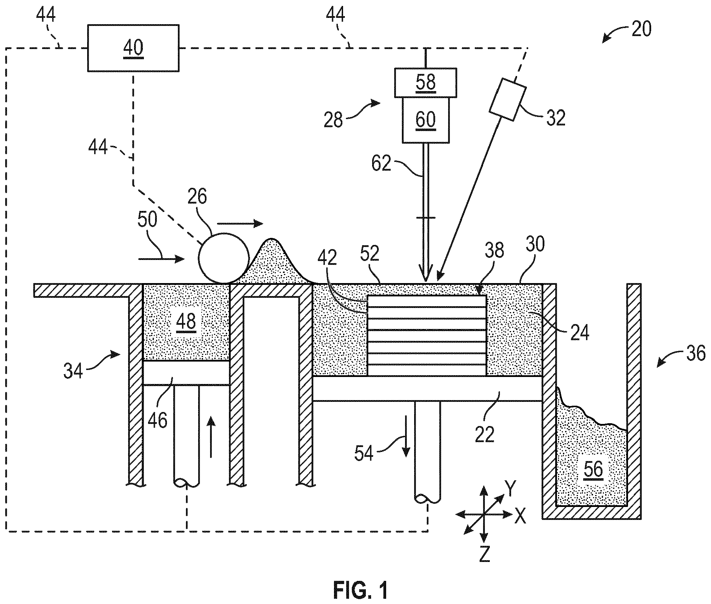

FIG. 1 schematically illustrates a prior art additive manufacturing system 20 having a build table 22 for holding a powder bed 24, a recoating mechanism such as a particle spreader or wiper 26 for producing the powder bed 24, an energy gun 28 for selectively melting regions of a layer 30 of the powder bed, a surface monitor 32, a powder supply hopper 34 and a powder surplus hopper 36. The additive manufacturing system 20 is constructed to build a workpiece 38 in a layer-by-layer fashion utilizing an additive manufacturing process controlled by an electrical controller 40 that may have an integral computer aided design system for modeling the workpiece 38 into a plurality of slices 42 additively built atop one-another generally in a vertical or z-coordinate direction.

The controller 40 controls the various components and operations through electric signals 44 that may be hard-wired, or wirelessly coupled, between one or more of the system components 22, 26, 28, 32, 34. The controller 40 may be implemented with a combination of hardware and software. The hardware may include memory and one or more single-core and/or multi-core processors. The memory may be a non-transitory computer readable medium, and adapted to store the software (e.g. program instructions) for execution by the processors. The hardware may also include analog and/or digital circuitry other than that described above.

Each solidified slice 42 of the workpiece 38 is associated with and produced from a respective layer 30 of the powder bed 24 prior to solidification. The powder layer 30 is placed on top of (or spread over) a build surface 50 of the previously solidified slice 42, or during initial operation, the build table 22. The controller 28 operates the system 20 through the series of electrical and/or digital signals 44 sent to the system 20 components. For instance, the controller 28 may send a signal 44 to a mechanical piston 46 of the supply hopper 34 to push a supply powder 48 upward for receipt by the spreader 26. The spreader 26 may be a wiper, roller, sprayer or other device that pushes (see arrow 50), sprays or otherwise places the supply powder 48 over a top build surface 52 of the workpiece 38 by a predetermined thickness established by vertical, downward, movement (see arrow 54) of the build table 22 that supports the powder bed 24 and workpiece 38. Any excess powder 56 may be pushed into the surplus hopper 36 by the spreader 26.

After a substantially level powder layer 30 is established over the build surface 52, the controller 42 may send a signal to the energy gun 28 that energizes a laser or electron beam device 58 and controls a directional mechanism 60 of the gun 28. The directional mechanism 60 may include a focusing lens that focuses a beam (see arrow 62) emitted from device 58 which, in-turn, may be deflected by an electromagnetic scanner or rotating mirror of the directional mechanism 60 so that the energy beam 62 selectively and controllably impinges upon, and thereby focuses the beam on the top layer 30 of the powder bed 24. The beam moves along the layer 30, melting at least a portion of the layer, region-by-region, and at a controlled rate and power to form melt pools, or melted state, and heat or partially melt the build surface 52 beneath the melt pool (i.e. meltback region) to promote the desired sintering and fusing of the powder and the joinder between slices 42. It is contemplated and understood that the powder 48 may not have an actual powder consistency (i.e. physical form), but may take the form of any raw material capable of being fused, sintered or melted upon a build surface of a workpiece and in accordance with additive manufacturing techniques. It is further understood and contemplated that the additive manufacturing system may include a method where fusing of powder is done by high-speed accumulation and then laser sintered (laser spray deposition).

As a leading melt pool is created at the where the beam hits the powder, the previous, trailing, melt pool begins to cool and solidify, thus forming a solidified region or portion of the slice 42.

In some systems, a surface monitor 32 is provided next to or near the directional mechanism 60. The surface monitor 32 is focused upon the top of the workpiece 38 to detect non-line of sight anomalies such as melt pool properties and surface defects. Such a monitor 32 is limited to thermal and optical sensors and are fixed in location.

In general, such a system works for its intended purpose. However, it has been discovered by the inventors hereof that such a system may face one or more challenged. The challenges can include the fact that existing non line-of-sight inspection sensors have the ability to detect only surface level defects in the build envelope, Sub surface defects cannot be traced using existing systems/methods and existing systems have fixed in locations and cannot move within the build chamber. Provided herein is a system and method for inspecting workpieces formed by an additive manufacturing process. The system can include laser or other means (e.g., electron beam) for producing the energy beam 62. The inspection is done by a either a single sensor or multiple sensors. In either case, the sensor is moveable relative to the upper surface of the workpiece. In particular, the sensor is moveable both a normal and tangent direction to the upper surface. This allows for more localized inspection. In one embodiment, the sensor inspection field can penetrate the surface of the workpiece for surface, near-surface and sub-surface anomaly detection. Further, in one embodiment, the sensor can penetrate the upper surface or the un-sintered material in the build chamber.

Also, the type sensor can be changed during a build/inspection. This can avoid the need stop the system during a build in order to calibrate a new sensor as will be understood when the following description is read by the skilled artisan.

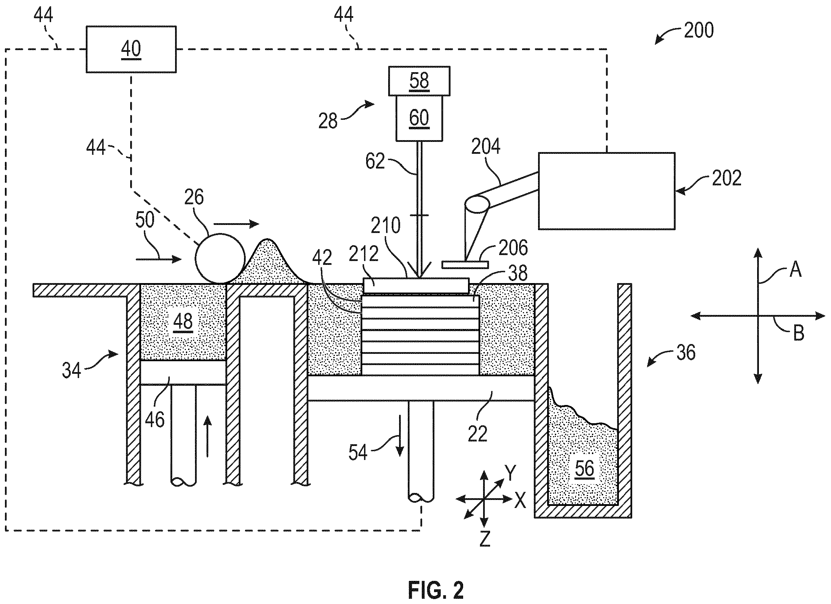

In the following description and now with reference to FIG. 2, an additive manufacturing system 200 is generally illustrated. The system 200 can include some or all of the elements of system 20 shown above. To that end, only certain portions of system 200 are shown and described in FIG. 2 but it shall be understood that the omission is not meant to limit FIG. 2 and every element shown in FIG. 1 can be included in FIG. 2 to create an embodiment of the present invention. Further, variations to the system of FIG. 1 can be made in the system of FIG. 2 by the skilled artisan based on the teachings herein.

As shown in FIG. 2, the system 200 includes deployable inspection mechanism (DIM) 202. As illustrated, the DIM 202 includes a positioning mechanism 204 such as an arm. However, an arm is not required and other types of positioning mechanisms could be provided. The positioning mechanism 204 moves a sensor 206 over some or all of the upper surface 210 of the last formed layer 212 of the workpiece 38. The sensor 206 can be also be referred to as an inspection sensor herein.

In one embodiment, the sensor 206 is capable of sensing anomalies below the upper surface 210 of the last formed layer 212. The sensor can be selected from one of: an x-ray sensor, an ultrasonic sensor, a thermal sensor, eddy current sensor, electromagnetic sensors, optical sensors, non-contact dimensional sensors, bluelight sensors, whitelight, etc. It shall further be understood that the sensor 206 can be changed during a build so that more than one type of sensor can be used during a build.

The positioning mechanism 204 can move the sensor in both a direction parallel to at least a portion of the upper surface 210 (arrow A) and a normal direction (arrow B). Such movement can provide for several possible advantages over prior systems. First, such a system can allow for in-process inspection of sub-surface anomalies because the sensor can be brought close to the upper surface 210 of the workpiece 38. Second, such a system can allow for the sensor to be changed during a build as the sensor 206 can be calibrated without having to shut down operation of the system 200. In contrast, in system 20 of FIG. 1, the sensor is fixed and the machine must be stopped and the sensor removed for calibration or calibrated after being replaced in through a procedure inconsistent with a continuous build. Then the new sensor would need to be calibrated based on where the sensor is located. In contrast, as the sensor 206 is movable, calibration can be achieved simply by moving the sensor or through the selection of a like sensor enabling a dual sensor data validation or an in process change of like sensors with staggered calibration cycles to enable improved productivity through build continuation and greater machine run-time availability.

Further, because the sensor 206 can be moved, location specific data can be gathered. This can be important for one or more reasons. Firstly, if a particular region is repeatedly showing defects, the beam source 58 or the directional mechanism 60 could be defective. Further, because specific position and location data is available, it can be control systems for closed loop feedback either passively (position control on new sensor system servo / resolver data) or actively through a photodiode integrated into the new sensor element that ensures "cross-calibration" between the laser position and the local sensor position.

Further, by being able to move the sensor 206, a particular, area can be monitored during a build to see if a defect has been cured. In prior systems, the detection of such a defect may result in the workpiece 38 being discarded. Herein, after the defect is detected, one or more additional layers can be formed and the sensor 206 can then scan the area with the defect. As the sensor 206 can scan below the upper surface 210, it may detect/determine that the defect has been cured during the formation of the additional layers. For example additional material has been melted on top of the defect or previously un-sintered material may be sintered., a peak or valley may have been smoothed when

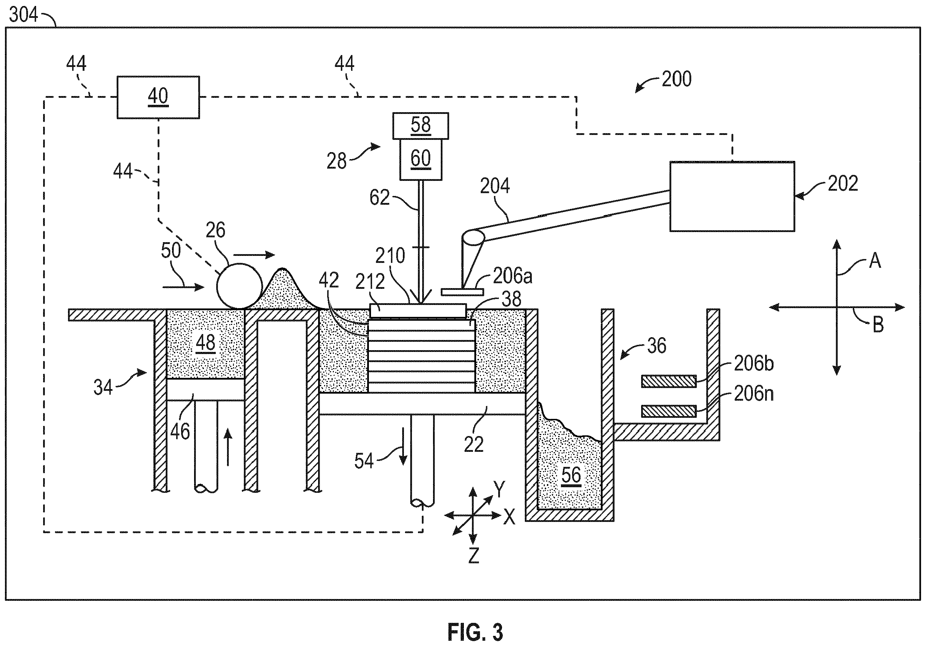

FIG. 3 shows another embodiment of a system 300 that is similar to those in FIG. 1 and 2 and includes an additional storage region 302 for additional sensors. As illustrated, the current used sensor is shown as 206a and the additional sensors are shown as 206b, .... 206n. The skilled artisan will realize that any number of additional sensors could be provided. The region 302 is contained within an outer boundary 304 of the system 300.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the invention as defined by the claims. In addition, many modifications may be made to adapt a particular situation or material to the teachings of the present disclosure without departing from the scope of the invention thereof. Therefore, it is intended that the present disclosure not be limited to the particular embodiment disclosed as the best mode contemplated for carrying out this present disclosure, but that the present invention will include all embodiments falling within the scope of the claims.

## Claims

1. An additive manufacturing system comprising:
an energy gun (28) for melting at least a portion of a raw material layer and thereby forming at least in part a slice of a workpiece (38);
a sensor (206) for detecting surface and sub-surface anomalies or physical properties of the portion; and
a positioning mechanism (204) that moves the sensor in at least one of a normal direction and a parallel direction relative to an upper surface of the workpiece.

2. The additive manufacturing system set forth in claim 1, wherein the sensor is an x-ray sensor.

3. The additive manufacturing system set forth in claim 1, wherein the sensor is an ultrasonic sensor.

4. The additive manufacturing system set forth in claim 1, wherein the sensor is a thermal sensor.

5. The additive manufacturing system set forth in claim 1, wherein the sensor is an eddy current sensor.

6. The additive manufacturing system set forth in claim 1, wherein the sensor is one of: an electromagnetic sensor an optical sensor, a non-contact dimensional sensor, or a blue light sensor.

7. The system of any preceding claim, wherein the positioning mechanism is an arm.

8. The system of claim 7, wherein the arm moves the sensor in both a normal direction and a parallel direction relative to the upper surface of the workpiece.

9. The additive manufacturing system set forth in any preceding claim, wherein the energy gun is a laser gun.

10. A method of operating an additive manufacturing system comprising the steps of:
forming at least a portion of a first slice of a workpiece;
taking a first image of a first region of the first slice with a sensor;
identifying an anomaly of an upper surface of the first slice through the image; and
moving the sensor in a direction that is one or both of parallel and normal to an upper surface of the workpiece and taking a first image of a second region of the first slice.

11. The method of claim 10, wherein moving the sensor includes:
moving the sensor in a direction normal to an upper surface of the workpiece; and
moving the sensor in a direction parallel to an upper surface of the workpiece.

12. The method set forth in claim 10 or 11, wherein the sensor is one of: an ultrasonic sensor; a thermal sensor; an x-ray sensor; and an electromagnetic sensor.

13. The method of claim 10, 11 or 12, further comprising:
forming a second slice on top of the first slice; and
taking a second image of the first region of the first slice with the sensor after the second slice has been formed on the first slice.

14. The method of claim 13, further comprising:
determining that the anomaly no longer exists after taking the second image.

15. The method of any of claims 10 to 14, further comprising:
taking a second image of the first region with a different sensor after the first image of the region is taken.
